(19) Europäisches Patentamt
European Patent Office
Office européen des brevets

(11) **EP 3 198 340 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(21) Anmeldenummer: **15756627.4**

(22) Anmeldetag: **27.08.2015**

(51) Int Cl.:
*G03B 21/14* (2006.01)    *G03B 21/00* (2006.01)
*G02B 27/01* (2006.01)    *B60Q 9/00* (2006.01)
*H04N 9/31* (2006.01)

(86) Internationale Anmeldenummer:
**PCT/EP2015/069594**

(87) Internationale Veröffentlichungsnummer:
**WO 2016/045903 (31.03.2016 Gazette 2016/13)**

(54) **KRAFTFAHRZEUG MIT EINER BELEUCHTUNGSEINRICHTUNG ZUR PROJEKTION EINES BILDES**

MOTOR VEHICLE COMPRISING AN ILLUMINATION DEVICE FOR PROJECTING AN IMAGE

VÉHICULE AUTOMOBILE AVEC UN DISPOSITIF D'ÉCLAIRAGE POUR LA PROJECTION D'UNE IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2014 DE 102014219371**

(43) Veröffentlichungstag der Anmeldung:
**02.08.2017 Patentblatt 2017/31**

(73) Patentinhaber: **Bayerische Motoren Werke Aktiengesellschaft
80809 München (DE)**

(72) Erfinder:
• **SIELER, Marcel
  Menlo Park, CA 94025 (US)**
• **GOCKE, Tim
  80796 München (DE)**

(56) Entgegenhaltungen:
**WO-A1-2013/111032    WO-A1-2013/167705
WO-A1-2014/180991    DE-A1-102006 059 684
DE-A1-102011 076 083    DE-C- 590 399
FR-A1- 2 967 625    GB-A- 2 482 951**

## Beschreibung

Die Erfindung betrifft ein Kraftfahrzeug mit einer Beleuchtungseinrichtung.

Aus dem Stand der Technik sind Fahrerassistenz-Systeme bekannt, die dem Fahrer eines Kraftfahrzeugs den Abstand der Fahrzeugkarosserie zu Objekten in der Umgebung anzeigen. Zum Beispiel wird bei Einpark-Assistenzsystemen über Ultraschall der Abstand des Kraftfahrzeugs zu möglichen Hindernissen gemessen und dem Fahrer akustisch bzw. visuell auf einem Display im Fahrzeuginneren vermittelt.

Herkömmliche Assistenzsysteme zur Abstandsanzeige sind aufwändig, denn sie benötigen eine Vielzahl von Sensoren, Kabelstränge, eine Softwarelogik sowie ein Display zur Visualisierung des Abstands des Fahrzeugs.

Der Druckschrift WO 2013/167705 A1 kann ein Kraftfahrzeug mit den Merkmalen des Oberbegriffs des Anspruchs 1 entnommen werden.

In dem Dokument DE 10 2011 076 083 A1 ist ein Projektionsdisplay mit einem Bildgeber und einer Mehrkanaloptik beschrieben, so dass ein Gesamtbild auf einer Projektionsfläche in der Form einer nicht-ebenen Freiformfläche generiert wird.

Das Dokument WO 2013/111032 A1 offenbart ein Beleuchtungssystem mit einer Mehrzahl von Projektionslinsen, um ein Muster auf eine Fläche zu projizieren.

In den Dokumenten GB 2 482 951 A, FR 2 967 625 A1, DE 10 2006 059 684 A1 sowie DE 590 399 C sind Kraftfahrzeuge mit Projektionseinrichtungen beschrieben, um eine Symbolik in eine Projektionsebene im Umfeld des Kraftfahrzeugs zu projizieren.

Aufgabe der Erfindung ist es, ein Kraftfahrzeug mit einer Beleuchtungseinrichtung zu schaffen, in dem auf einfache Weise der Abstand zu Objekten in der Umgebung des Fahrzeugs visualisiert wird.

Diese Aufgabe wird durch das Kraftfahrzeug gemäß Patentanspruch 1 gelöst. Weiterbildungen der Erfindung sind in den abhängigen Ansprüchen definiert.

Das erfindungsgemäße Kraftfahrzeug umfasst eine Beleuchtungseinrichtung, welche ein oder mehrere Multiapertur-Projektionsdisplays umfasst. Ein jeweiliges Multiapertur-Projektionsdisplay enthält ein Leuchtmittel zur Beleuchtung einer Vielzahl von Objektstrukturen und ein Array aus Projektionslinsen, wobei jede Projektionslinse einer Objektstruktur zugeordnet ist, welche durch die jeweilige Projektionslinse in zumindest eine Projektionsebene projiziert wird. Die Projektionsebene erstreckt sich senkrecht und/oder schräg zum Boden in der Umgebung des Kraftfahrzeugs, insbesondere in einem Winkel von 45° oder mehr, vorzugsweise von 80° oder mehr, in Bezug auf den Boden. Das oder die Multiapertur-Projektionsdisplays sind derart ausgestaltet, dass durch die projizierten Objektstrukturen ein Gesamtbild mit einer durch den Fahrer des Kraftfahrzeugs wahrnehmbaren Symbolik in der zumindest einen Projektionsebene erzeugt wird. Gemäß dem Prinzip der Projektion ist das Gesamtbild in den jeweiligen Projektionsebenen dann für den Fahrer sichtbar, wenn sich die Fläche eines Hindernisses bzw. Detektors bzw. Schirms in der entsprechenden Projektionsebene befindet. In der jeweiligen Projektionsebene findet eine konstruktive Überlagerung aller Einzelbilder/-projektionen der Objektstrukturen statt, was zu einer scharfen Abbildung der Zielsymbolik führt. In einer bevorzugten Variante umfasst das Multiapertur-Projektionsdisplay neben dem Array aus Projektionslinsen auch ein Array aus Feldlinsen, welches zwischen dem Leuchtmittel und den Objektstrukturen angeordnet ist.

Erfindungsgemäß werden ein oder mehrere an sich bekannte Multiapertur-Projektionsdisplays dazu genutzt, um durch Abbildung einer Symbolik das Vorhandensein eines Hindernisses in entsprechenden Projektionsebenen anzuzeigen und hierdurch den Abstand des Objekts zum Kraftfahrzeug zu visualisieren. Auf diese Weise wird rein durch eine Beleuchtungseinrichtung ohne spezielle Logik eine passive Abstandsanzeige geschaffen. Vorzugsweise werden in dem erfindungsgemäßen Kraftfahrzeug die in dem Dokument DE 10 2009 024 894 A1 bzw. dem Dokument DE 10 2011 076 083 A1 offenbarten Multiapertur-Projektionsdisplays verwendet.

Erfindungsgemäß sind das oder die Multiapertur-Projektionsdisplays derart ausgestaltet, dass in mehreren Projektionsebenen mit unterschiedlichem Abstand vom Kraftfahrzeug verschiedene Gesamtbilder mit unterschiedlicher, durch den Fahrer des Kraftfahrzeugs wahrnehmbarer Symbolik generiert werden. Unter dem Abstand der Projektionsebenen vom Kraftfahrzeug ist die geringste Distanz zwischen der entsprechenden Projektionsebene und der Außenfläche des Kraftfahrzeugs zu verstehen. Die Erfindung hat den Vorteil, dass dem Fahrer des Kraftfahrzeugs über mehrere Symboliken vermittelt werden kann, wie sich der Abstand seines Kraftfahrzeugs zu Objekten in der Umgebung verändert. Dabei sind ein oder mehrere einzelne Multiapertur-Projektionsdisplays derart ausgestaltet, dass mit dem jeweiligen einzelnen Multiapertur-Projektionsdisplay in mehreren Projektionsebenen mit unterschiedlichem Abstand vom Kraftfahrzeug verschiedene Gesamtbilder mit unterschiedlicher, durch den Fahrer des Fahrzeugs wahrnehmbarer Symbolik generiert werden. Mit anderen Worten wird erfindungsgemäß die Funktion der Wiedergabe von unterschiedlichen Symboliken in verschiedenen Projektionsebenen separat in einzelne Multiapertur-Projektionsdisplays integriert.

Die Erzeugung von mehreren Projektionsebenen mit einem einzelnen Multiapertur-Projektionsdisplay wird in einer bevorzugten Ausführungsform durch eine geeignete Abwandlung des in den eingangs genannten Dokumenten beschriebenen Multiapertur-Projektionsdisplays erreicht. Gemäß dieser Abwandlung sind die Objektstrukturen eines einzelnen Multiapertur-Projektionsdisplays die Verknüpfung von mehreren separaten Objektarrays (im Folgenden auch als Arrays bezeichnet) von Objektstrukturen aus transmittiven und lichtundurchlässigen Bereichen. Die separaten Objektarrays sind derart ausgestaltet, dass für jedes separate Array ein Gesamtbild einer jeweiligen Projektionsebene mit im Vergleich zu den anderen separaten Arrays unterschiedlichem Abstand vom Kraftfahrzeug generiert wird. Die Verknüpfung der separaten Arrays ist dabei derart, dass nur diejenigen transmittiven Bereiche wiedergegeben werden, welche in den Objektstrukturen aller separater Objektarrays vorkommen. In allen anderen Bereichen sind die Objektstrukturen der Verknüpfung lichtundurchlässig. In einer bevorzugten Variante der soeben beschriebenen Ausführungsform ist jeder Objektstruktur in jedem separaten Array eine jeweilige Projektionslinse zur Projektion der Objektstruktur zugeordnet, wobei der Mittenabstand von benachbarten Objektstrukturen in jedem separaten Array unterschiedlich zu dem Mittenabstand von benachbarten zugeordneten Projektionslinsen und unterschiedlich zu dem Mittenabstand der entsprechenden Objektstrukturen der anderen separaten Arrays ist. In der detaillierten Beschreibung wird die Funktionsweise der soeben beschriebenen Ausführungsform nochmals näher erläutert. Diese Ausgestaltung der Erfindung ermöglicht auf einfache Weise mittels eines einzigen Multiapertur-Projektionsdisplays scharfe Abbildungen von unterschiedlichen Symboliken in verschiedenen Abständen zum Kraftfahrzeug.

In einer weiteren bevorzugten Ausführungsform umfasst zumindest ein Teil der Symboliken (d.h. zumindest eine Symbolik) jeweils ein oder mehrere Schriftzeichen und/oder Piktogramme und/oder Zahlen. Um den Abstand von Objekten zum Kraftfahrzeug genau anzuzeigen, gibt in einer weiteren Ausführungsform zumindest ein Teil der Symboliken jeweils den Abstand der entsprechenden Projektionsebenen von dem Kraftfahrzeug an.

In einer weiteren Variante beinhaltet zumindest ein Teil der Symboliken jeweils einen Warnhinweis für den Fahrer. Vorzugsweise beinhaltet - im Falle von mehreren unterschiedlichen Symboliken in verschiedenen Projektionsebenen - die Symbolik in der Projektionsebene mit dem geringsten Abstand vom Kraftfahrzeug den Warnhinweis. Ebenso kann vorgesehen sein, dass die Symboliken in denjenigen Projektionsebenen, deren Abstand vom Kraftfahrzeug eine vorbestimmte Schwelle unterschreiten, den Warnhinweis für den Fahrer beinhalten. Mit der soeben beschriebenen Variante wird nochmals ein besonderer Hinweis für den Fahrer bei kleineren Abständen zu anderen Objekten erzeugt, wodurch die Gefahr eines Unfalls weiter vermindert wird.

In einer weiteren bevorzugten Ausführungsform liegen für zumindest einen Teil der Multiapertur-Projektionsdisplays die Projektionsebene oder Projektionsebenen vor der Fahrzeugfront und vorzugsweise im Wesentlichen senkrecht zur Fahrzeugfront. Diese Variante der Erfindung eignet sich insbesondere zur Realisierung eines Einpark-Assistenzsystems oder einer Abstandskontrolle zu vorausfahrenden Fahrzeugen.

In einer weiteren Variante des erfindungsgemäßen Kraftfahrzeugs liegen für zumindest einen Teil der Multiapertur-Projektionsdisplays die Projektionsebene oder Projektionsebenen hinter dem Fahrzeugheck und vorzugsweise im Wesentlichen senkrecht zum Fahrzeugheck. Vorzugsweise ist dabei im Fahrzeugheck eine Kamera vorgesehen, welche die Projektionsebene(n) erfasst, wobei das Bild der Kamera dem Fahrer in einem Display im Fahrzeuginnenraum angezeigt wird. Mit dieser Variante wird wiederum in geeigneter Weise ein Einpark-Assistenzsystem bzw. eine Abstandskontrolle zu hinterherfahrenden Fahrzeugen realisiert.

In einer weiteren Ausgestaltung des erfindungsgemäßen Kraftfahrzeugs verlaufen für zumindest einen Teil der Multiapertur-Projektionsdisplays die Projektionsebene oder Projektionsebenen parallel zur Längsachse des Kraftfahrzeugs und versetzt zu einer Längsseite des Kraftfahrzeugs seitlich neben und/oder vor und/oder hinter der Längsseite. Mit dieser Variante der Erfindung wird in geeigneter Weise ein Engstellen-Licht geschaffen, mit dem dem Fahrer des Kraftfahrzeugs beim Durchfahren von Engstellen der seitliche Abstand seines Fahrzeugs zur Engstelle angezeigt wird. Vorzugsweise sind eine oder mehrere Projektionsebenen auf beiden Längsseiten des Kraftfahrzeugs vorgesehen.

In einer Variante der soeben beschriebenen Ausführungsform umfasst die Symbolik eine parallel zur Längsachse des Kraftfahrzeugs verlaufende Linie. Hierdurch wird dem Fahrer einfach und intuitiv der seitliche Abstand seines Fahrzeugs zu Engstellen vermittelt. Im Falle, dass mehrere Projektionsebenen mit unterschiedlicher Symbolik erzeugt werden, ist die Linie mit dem geringsten Versatz zur Längsseite vorzugsweise durchgezogen, wodurch dem Fahrer eine Warnung vermittelt wird, dass der Abstand zur Engstelle sehr gering wird. Demgegenüber können Linien mit größerem Versatz z.B. als gestrichelte Linien dargestellt werden.

In einer weiteren bevorzugten Variante des erfindungsgemäßen Kraftfahrzeugs ist zumindest ein Multiapertur-Projektionsdisplay in zumindest einem Frontscheinwerfer und/oder zumindest einer Heckleuchte des Kraftfahrzeugs vorgesehen. Aufgrund der kompakten Abmessungen von Multiapertur-Projektionsdisplays im Bereich von einigen Zentimetern ist die Integration dieser Displays in Frontscheinwerfern bzw. Heckleuchten problemlos möglich.

In einer weiteren Ausgestaltung des erfindungsgemäßen Kraftfahrzeugs ist in einem linken und rechten Scheinwerfer und/oder in einer linken und rechten Heckleuchte jeweils zumindest ein Multiapertur-Projektionsdisplay integriert.

Ausführungsbeispiele der Erfindung werden nachfolgend anhand der beigefügten Figuren detailliert beschrieben.

Es zeigen:

Fig. 1          eine Schnittansicht eines Multiapertur-Projektionsdisplays, das in einer Ausführungsform des erfindungsgemäßen Kraftfahrzeugs eingesetzt werden kann;

Fig. 2          eine perspektivische Ansicht zur Verdeutlichung der Projektion des MultiaperturProjektionsdisplays aus Fig. 1;

Fig. 3 bis Fig. 6          eine Draufsicht auf Objektstrukturen für eine Ausführungsform eines Multiapertur-Projektionsdisplays, mit der Gesamtbilder in mehreren Projektionsebenen generiert werden können; und

Fig. 7 bis Fig. 9          perspektivische Ansichten gesehen aus der Frontscheibe von Ausführungsformen eines erfindungsgemäßen Kraftfahrzeugs, wobei verschiedene Varianten von Symboliken dargestellt sind.

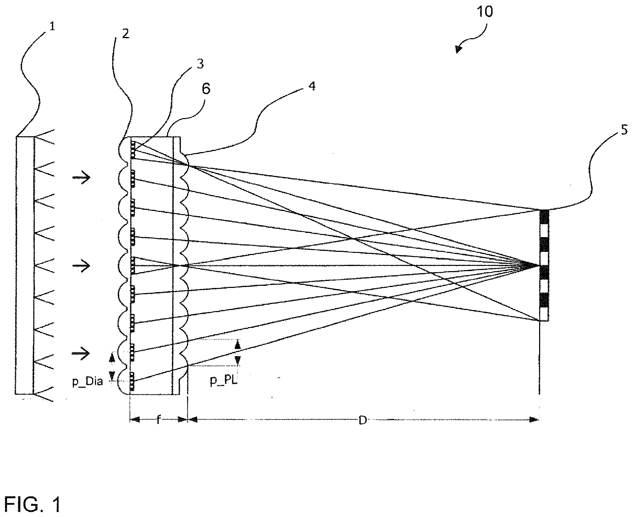

Fig. 1 zeigt ein an sich bekanntes Multiapertur-Projektionsdisplay, welches aus der Druckschrift DE 10 2009 024 894 A1 bekannt ist. Dieses Projektionsdisplay kommt in einer Ausführungsform des erfindungsgemäßen Kraftfahrzeugs zum Einsatz. Das Projektionsdisplay 10 umfasst ein Leuchtmittel 1, welches z.B. als Laserdiode oder LED oder OLED ausgeführt sein kann. Das Licht des Leuchtmittels fällt auf ein Feldlinsen-Array in der Form einer Vielzahl von Kondensorlinsen 2, die auf einem Substrat 6 (z. B. Glassubstrat) aufgebracht sind, wobei sich benachbart zu jeder Kondensorlinse 2 eine Objektstruktur 3 aus transmittiven und lichtundurchlässigen Bereichen befindet. Auf der Seite des Glassubstrats, welche der Seite mit den Objektstrukturen gegenüberliegt, befindet sich ein Array aus Projektionslinsen 4, wobei der Abstand zwischen den Projektionslinsen und den Objektstrukturen 3 im Wesentlichen der Brennweite f der einzelnen Projektionslinsen entspricht. Jede Projektionslinse ist einer Objektstruktur zugeordnet, die über die entsprechende Projektionslinse in die Projektionsebene 5 im Abstand D von dem Array der Projektionslinsen abgebildet wird. Dies wird durch die dargestellten Strahlengänge verdeutlicht. Man erkennt dabei, dass der Pitch-Abstand p_Dia zwischen benachbarten Objektstrukturen 3 größer ist als der Pitch-Abstand p_PL zwischen benachbarten Projektionslinsen 4. Hierdurch wird eine Verkippung der optischen Achsen der entsprechenden Paare von Objektstruktur und Projektionslinse bewirkt und damit eine Überlagerung aller projizierten Bilder der Objektstrukturen 3 zu einem Gesamtbild in der Projektionsebene 5 erreicht.

Die Vergrößerung M des Gesamtbilds in der Projektionsebene 5 folgt aus dem Verhältnis der Projektionsentfernung D zur Brennweite f der Projektionslinsen 4 und lautet wie folgt:

$$M = \frac{D}{f} = \frac{p\_PL}{p\_Dia - p\_PL} \qquad (1)$$

Die Vergrößerung ist somit von dem Unterschied der Pitch-Abstände zwischen den Objektstrukturen und den Projektionslinsen abhängig. Je kleiner dieser Unterschied ist, desto größer ist die Vergrößerung und desto weiter liegt die Projektionsebene von dem Projektionsdisplay entfernt.

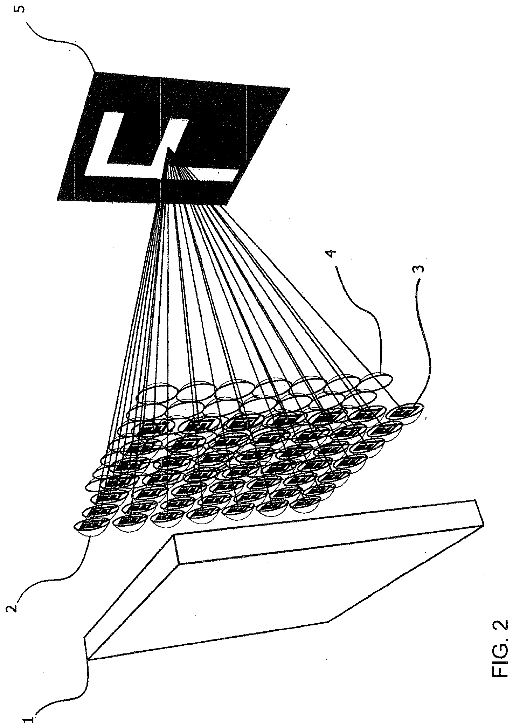

Fig. 2 verdeutlicht nochmals die Bildprojektion der Anordnung der Fig. 1. Beispielhaft sind dabei Objektstrukturen in der Form des transmittiven Buchstabens "F" wiedergegeben. Wie aus Fig. 2 ersichtlich ist, wird dabei jeder einzelne Buchstabe über eine entsprechende Projektionslinse 4 in den gleichen vergrößerten Buchstaben in der Projektionsebene 5 abgebildet. Der Buchstabe in der Projektionsebene 5 ist somit eine Überlagerung der Abbildung von allen Objektstrukturen.

Mit dem Multiapertur-Projektionsdisplay der Fig. 1 wird ein lichtstarkes und sehr kompaktes Projektionsmodul mit Abmessungen im Bereich von wenigen Zentimetern geschaffen. Dabei kann auf einfache Weise auch eine Abbildung in schräge Projektionsflächen bzw. Freiformflächen erreicht werden. Ein entsprechendes Projektionsdisplay mit Projektionsfreiformflächen oder verkippten Projektionsflächen ist aus dem Dokument DE 10 2011 076 083 A1 bekannt.

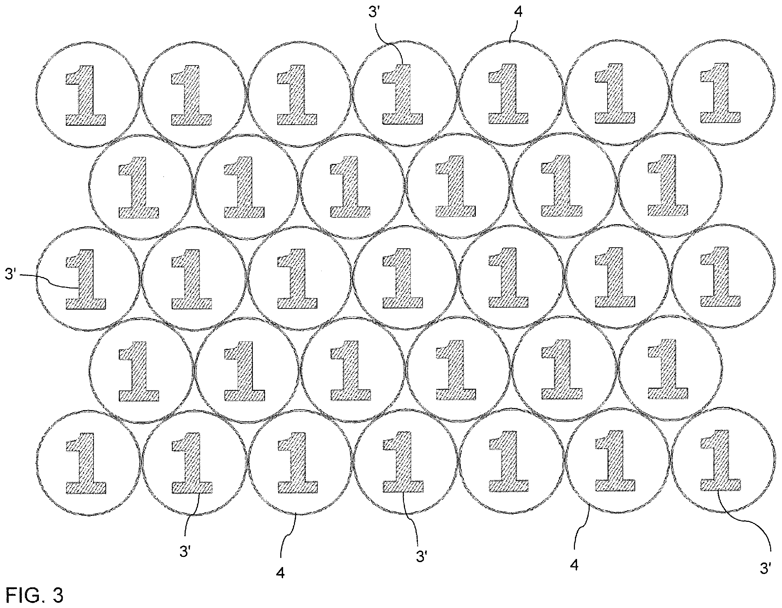

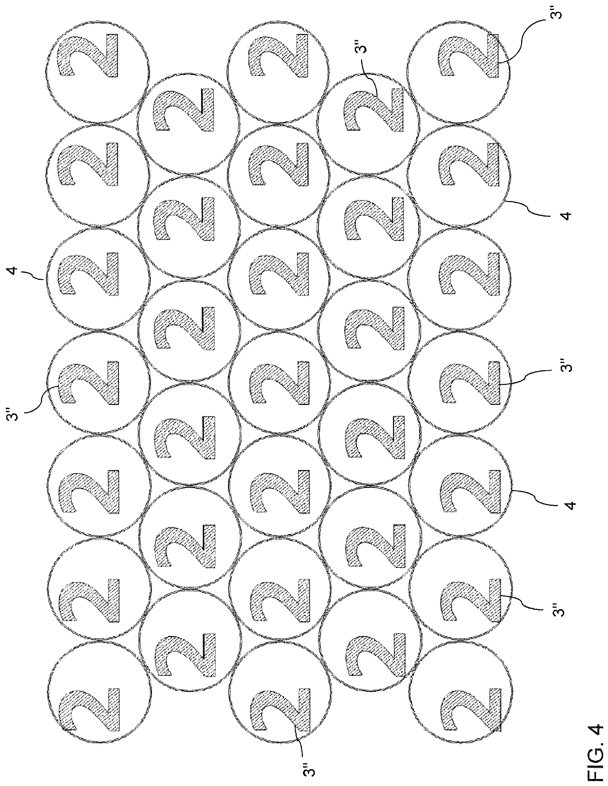

In einer besonders bevorzugten Ausführungsform der Erfindung wird eine Abwandlung des Projektionsdisplays aus Fig. 1 verwendet, bei der in zwei und ggf. auch mehr unterschiedlichen Projektionsebenen verschiedene Bilder generiert werden. Dies ist in Fig. 3 bis Fig. 6 für zwei unterschiedliche Projektionsebenen veranschaulicht und wird durch die Verknüpfung von zwei separaten und unterschiedlichen Objektstrukturen 3' und 3" erreicht. Zur Verdeutlichung sind in Fig. 3 bis Fig. 6 neben den Objektstrukturen 3 bzw. 3" die Projektionslinsen 4 schematisch angedeutet. Der Pitch-Abstand der Objektstrukturen 3 bzw. 3" ist unterschiedlich zu dem Pitch-Abstand der Projektionslinsen 4, was aufgrund der schematischen Darstellung aus Fig. 3 nicht ersichtlich ist. Die Objektstrukturen 3' und 3" sind vorläufige bzw. virtuelle Objektstrukturen, denn in der Ebene der Objektstrukturen wird bei der Herstellung des Projektionsdisplays eine geeignete Verknüpfung der beiden Objektstrukturen erzeugt. Fig. 3 zeigt in Draufsicht auf das Array aus Projektionslinsen ein erstes Array aus Objektstrukturen 3', die als transmittive Zahlen "1" ausgeführt sind, wobei die einzelnen Zahlen durch eine nach rechts geneigte Schraffur angedeutet sind. Aus Übersichtlichkeitsgründen sind nur einige der Zahlen mit dem Bezugszeichen 3' und nur einige der Projektionslinsen mit dem Bezugszeichen 4 versehen. Analog zeigt Fig. 4 ein zweites Array aus Objektstrukturen 3" bestehend aus dem transmittierenden Buchstaben "2", wobei aus Übersichtlichkeitsgründen nur einige dieser Objektstrukturen mit dem Bezugszeichen 3" versehen sind. Die Objektstrukturen 3" sind zur Unterscheidung gegenüber den Objektstrukturen 3' durch eine nach links geneigte Schraffur wiedergegeben. In beiden Objektstrukturen 3' und 3" ist der Bereich um die entsprechenden Zahlen "1" bzw. "2" lichtundurchlässig.

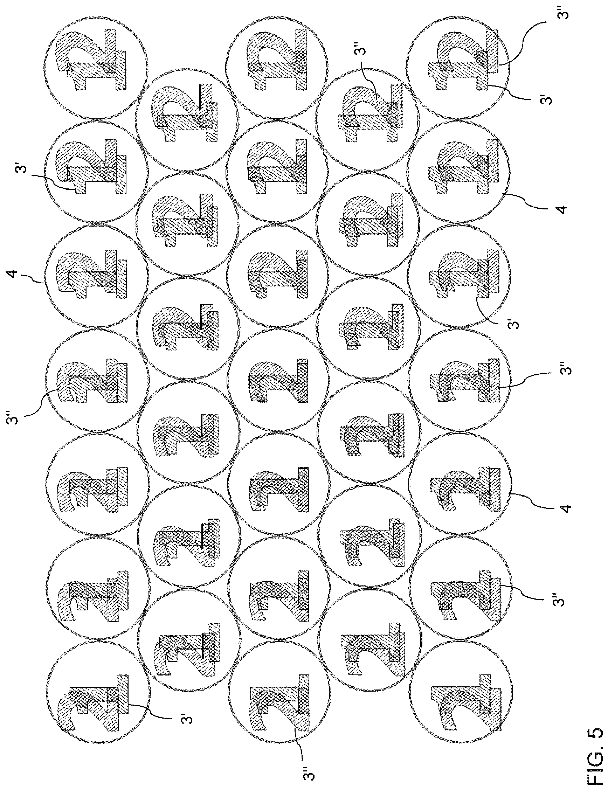

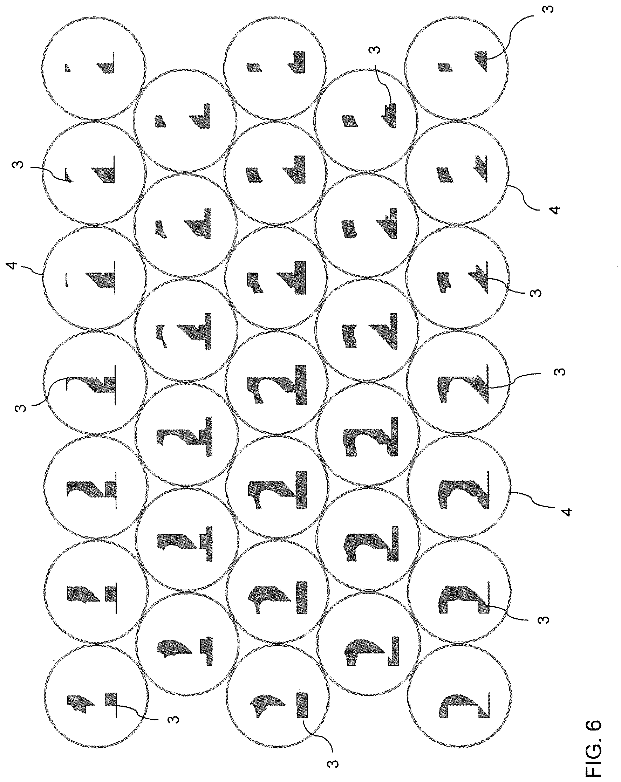

Der Pitch-Abstand des ersten Arrays aus den Objektstrukturen 3' ist kleiner als der Pitch-Abstand der zweiten Arrays aus den Objektstrukturen 3". Demzufolge ergibt sich gemäß der obigen Gleichung (1) für das Array der Objektstrukturen 3' eine Projektionsebene mit größerem Abstand zum Projektionsdisplay als für das Array der Objektstrukturen 3". Fig. 5 zeigt die Überlagerung der beiden Arrays aus Fig. 3 und Fig. 4. Auf diese Überlagerung wird nunmehr eine UND-Operation angewandt, so dass nur noch die in beiden Objektstrukturen 3' und 3" gemeinsam vorkommenden (überlappenden) transmittiven Bereiche wiedergegeben werden. Die nicht überlappenden transmittiven Bereiche sind lichtundurchlässig, Hieraus ergibt sich das in Fig. 6 dargestellte Array aus Objektstrukturen 3, wobei nur die dunkel dargestellten Bereiche transmittiv sind und der Rest der Objektstruktur lichtundurchlässig ist. Die Verwendung des Objektarrays aus Fig. 6 in einem Multiapertur-Projektionsdisplay hat nunmehr zur Folge, dass die Zahl "1" in einer anderen Projektionsebene scharf abgebildet wird als die Zahl "2", wobei jedoch die jeweils andere Zahl in der entsprechenden Projektionsebene nicht sichtbar ist. Bei der Bewegung eines Hinde r-nisses zwischen den Projektionsebenen der beiden Zahlen verschwindet die Zahl der einen Projektionsebene und die Zahl der anderen Projektionsebene taucht auf.

Das Prinzip der Fig. 3 bis Fig. 6 ist problemlos auf mehr als zwei separate Arrays aus Objektstrukturen übertragbar, wobei in diesem Fall dann die gemeinsamen transmittiven Bereiche von den mehr als zwei Objektstrukturen über eine UND-Operation miteinander verknüpft werden. Ferner kann das Prinzip auch problemlos auf schräge bzw. beliebig geformte Projektionsflächen übertragen werden, bei denen die einzelnen Objektstrukturen geeignet verzerrte Bilder sind, um hierdurch die Darstellung in einer Freiform-Projektionsebene zu erreichen. In der eingangs erwähnten Druckschrift DE 10 2011 076 083 A1 ist diese Projektion auf Freiformflächen beschrieben.

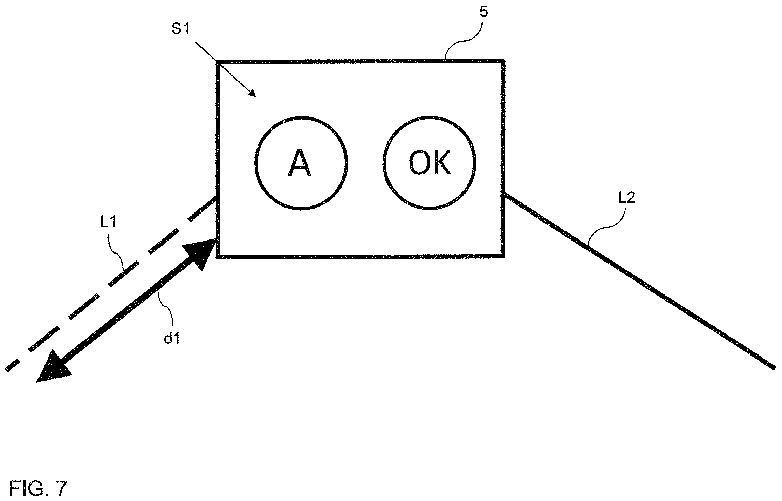

Indem entsprechend den Fig.3 bis Fig. 6 für die Objektstrukturen 3" ein anderes Symbol als für die Objektstrukturen 3' verwendet wird, können hierdurch unterschiedliche Symboliken in verschiedenen Projektionsabständen zum Kraftfahrzeug generiert werden. Dies wird in einer Ausführungsform des erfindungsgemäßen Kraftfahrzeugs dazu genutzt, um ein Baustellen- bzw. Engstellenlicht oder eine passive Abstandsanzeige für ein Einpark-Assistenzsystem zu realisieren, wie im Folgenden anhand von Fig. 7 bis Fig. 9 erläutert wird.

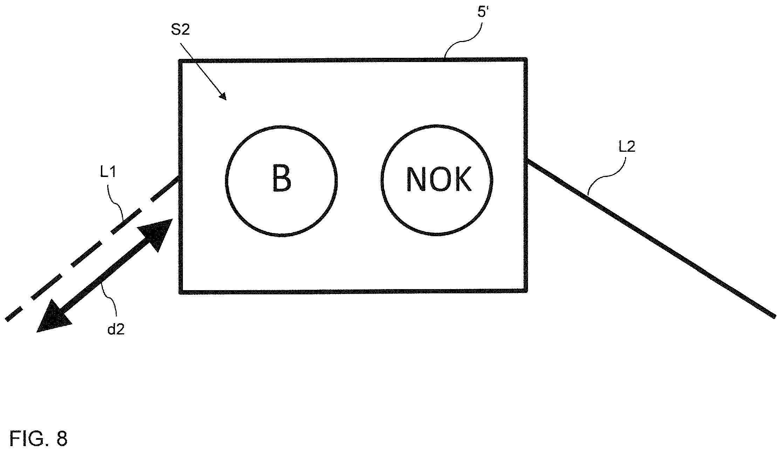

Fig. 7 bis Fig. 9 zeigen in perspektivischer Darstellung eine rechte Fahrspur einer Fahrbahn, wobei die Fahrspur durch die Fahrbahnmittellinie L1 sowie die rechte Fahrbahnrandlinie L2 begrenzt ist. Es ist dabei die Blickrichtung des Fahrers aus der Frontscheibe einer Ausführungsform des erfindungsgemäßen Kraftfahrzeugs dargestellt. Fig. 7 und Fig. 8 zeigen die Realisierung eines Einpark-Assistenzsystems mit dem oben beschriebenen Multiapertur-Projektionsdisplay, wobei im linken und rechten Scheinwerfer ein solches Multiapertur-Projektionsdisplay verbaut ist, das jeweils unterschiedliche Symboliken in zwei verschiedenen Projektionsebenen wiedergibt. Dabei weist eine Projektionsebene 5 einen größeren Abstand d1 (Fig. 7) von der Fahrzeugfront auf als die andere Projektionsebene 5', deren Abstand zum Kraftfahrzeug den kleineren Wert d2 annimmt.

In dem Szenario der Fig. 7 wird durch die Projektionsdisplays in den Scheinwerfern eine erste Symbolik S1 generiert, wobei der linke Scheinwerfer einen Kreis mit dem darin befindlichen Buchstaben "A" anzeigt und der rechte Scheinwerfer einen Kreis mit den darin befindlichen Buchstaben "OK" wiedergibt. Die entsprechenden Symbole sind beispielhaft und können auch beliebig anders ausgestaltet sein. Im Unterschied hierzu wird gemäß Fig. 8 in der Projektionsebene 5' mit dem geringeren Abstand d2 von der Fahrzeugfront die von der Symbolik S1 unterschiedliche Symbolik S2 dargestellt. Diese Symbolik ist beispielhaft wiedergegeben durch einen Kreis mit darin befindlichem Buchstaben "B" (generiert durch den linken Scheinwerfer) und durch einen Kreis mit darin enthaltener Symbolfolge "NOK" (generiert durch den rechten Scheinwerfer). Durch die Symbole "NOK = nicht in Ordnung" wird dem Fahrer vermittelt, dass der Abstand zum vorausstehenden Fahrzeug bzw. zu einem anderen vorausstehenden Objekt sehr klein wird und so die Gefahr eines Unfalls beim Einparken besteht. Im Unterschied hierzu wird dem Fahrer bei größerem Abstand zur entsprechenden Projektionsebene gemäß Fig. 7 vermittelt, dass noch keine Unfallgefahr besteht ("OK = in Ordnung").

Mit der Ausführungsform gemäß Fig. 7 und Fig. 8 wird somit über die Projektion von unterschiedlichen Symboliken in verschiedene Projektionsebenen eine passive Abstandskontrolle beim Einparken geschaffen, über welche dem Fahrer der Abstand zu Objekten vor der Fahrzeugfront vermittelt wird. Das System kann analog auch in Heckleuchten des Fahrzeugs integriert werden, wobei in diesem Fall die entsprechenden Symboliken z.B. über eine Rückfahrkamera des Kraftfahrzeugs dem Fahrer wiedergegeben werden.

Bei dem Einpark-Assistenzsystem aus Fig. 7 und 8 liegen die Abstände d1 und d2 im Bereich von einigen Zentimetern, z.B. im Bereich von 10 cm bis 50 cm. Gegebenenfalls kann das System der Fig. 7 und Fig. 8 jedoch auch zur Abstandskontrolle während der Fahrt des Kraftfahrzeugs in Bezug auf ein vorausfahrendes Kraftfahrzeug eingesetzt werden. In diesem Fall werden die Abstände d1 und d2 entsprechend größer gewählt und liegen im Bereich von mehreren Metern.

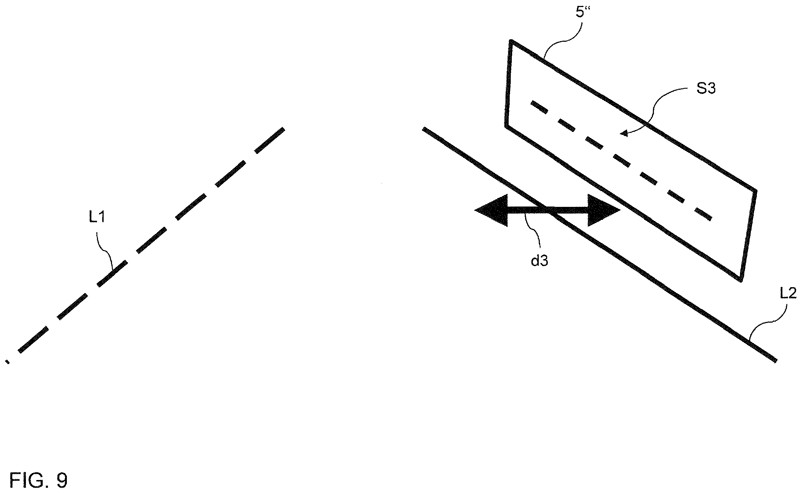

Fig. 9 zeigt ein Szenario, bei dem in dem erfindungsgemäßen Kraftfahrzeug über ein Multiapertur-Projektionsdisplay ein Baustellen- bzw. Engstellenlicht realisiert wird. In Analogie zu Fig. 7 und Fig. 8 ist die Fahrspur aus Sicht des Fahrers des Kraftfahrzeugs durch die Fahrbahnmittellinie L1 sowie die rechte Fahrbahnrandlinie L2 wiedergegeben. Nunmehr wird jedoch eine schräge Projektionsebene 5" mit einem vorgegebenen Versatz d3 zur rechten Fahrzeugseite generiert. In dieser Projektionsebene ist eine Linie dargestellt, die parallel zur Fahrzeuglängsachse verläuft. Auf diese Weise wird dem Fahrer vermittelt, dass der Abstand der rechten Seite seines Kraftfahrzeugs zu einem entsprechenden Objekt, auf das die Projektionsebene 5" projiziert wird, eine bestimmte Größe unterschreitet. Der Abstand d3 kann z.B. 20 cm und ggf. auch mehr oder weniger zur rechten Fahrzeuglängsseite betragen. Über die Symbolik der Projektionsebene 5" wird dem Fahrer somit vermittelt, wie nahe sich die rechte Fahrzeuglängsseite an einer Engstelle befindet, was insbesondere beim Durchfahren von Baustellen hilfreich ist. Vorzugsweise wird in gleicher Weise über ein weiteres Multiapertur-Projektionsdisplay eine weitere Projektionsebene mit einem Versatz zur linken Fahrzeuglängsseite erzeugt. Auch diese Symbolik enthält eine entsprechende Linie. Hierdurch kann dem Fahrer innerhalb eines virtuellen Tunnels ein Abstand zu Engstellen visualisiert werden.

Gegebenenfalls können in dem Szenario der Fig. 9 durch die Multiapertur-Projektionsdisplays auch mehrere Projektionsebenen jeweils rechts und links der entsprechenden Fahrzeuglängsseite generiert werden. Auf diese Weise wird dem Fahrer kontinuierlich vermittelt, wie nahe sich sein Fahrzeug an seitlichen Objekten befindet. Insbesondere kann dabei die Projektionsebene mit dem geringsten Abstand zu der entsprechenden Längsseite des Fahrzeugs eine Warnmeldung beinhalten. Eine solche Warnmeldung kann z.B. dadurch realisiert werden, dass anstatt von gestrichelten Linien eine durchgezogene Linie wiedergegeben wird, die dem Fahrer vermittelt, dass die Gefahr der Kollision mit seitlichen Objekten besteht.

Wie oben beschrieben, werden in einigen der soeben erläuterten Ausführungsformen unterschiedliche Symbole in verschiedenen Projektionsebenen mit unterschiedlichem Abstand zum Fahrzeug generiert. Mit anderen Worten sind in unterschiedlichen Beobachtungsentfernungen unterschiedliche Symbole für den Fahrer scharf sichtbar. Bei der Bewegung von einer Projektionsebene zu einer anderen Projektionsebene mit unterschiedlicher Symbolik verschwindet schrittweise die Symbolik der einen Projektionsebene, während die Symbolik der anderen Projektionsebene langsam erscheint, bis sie schließlich in der Projektionsebene scharf wiedergegeben ist. Das beschriebene Verfahren zur Objektgenerierung verhindert dabei die Beleuchtung von dunklen Flächen in den Sollbildern der Projektionsebenen. Im Fernfeld außerhalb der Projektionsebenen überlagern sich alle Abbildungen, so dass ein homogenes Lichtbild entsteht und die Symboliken nicht mehr erkennbar sind. Die unterschiedlichen Symbole können je nach Ausgestaltung verschieden gewählt werden. Gegebenenfalls kann ein Symbol auch einen entsprechenden Abstand der Projektionsebene zum Fahrzeug in Zahlen angeben.

Die im Vorangegangenen beschriebenen Ausführungsformen der Erfindung weisen eine Reihe von Vorteilen auf. Insbesondere kann die Technologie des Multiapertur-Projektionsdisplays dafür benutzt werden, um sehr kostengünstig die Funktion eines passiven Einpark-Assistenzsystems bzw. eines Baustellen-Lichts zu realisieren. Eine visuelle Rücckopplung ist somit auch ohne einen Blick auf ein Display im Fahrzeug bzw. ein Head-up-Display möglich. Die Funktion der Darstellung von Symboliken in verschiedenen Projektionsebenen kann aufgrund der kompakten Bauweise von Multiapertur-Projektionsdisplays stark miniaturisiert werden und auch mit anderen Funktionen, wie z.B. einem Abblendlicht, verknüpft werden.

## Bezugszeichen liste

| 1 | Leuchtmittel |
|---|---|
| 2 | Kondensorlinsen |
| 3, 3', 3" | Objektstrukturen |
| 4 | Projektionslinsen |
| 5, 5', 5" | Projektionsebenen |
| 6 | Glassubstrat |
| 10 | Multiapertur-Projektionsdisplay |
| d1, d2, d3 | Abstand |
| S1, S2, S3 | Symbolik |
| L1 | Fahrbahn mittellinie |
| L2 | Fahrbahnrand linie |

## Patentansprüche

1. Kraftfahrzeug mit einer Beleuchtungseinrichtung, welche ein oder mehrere Multiapertur-Projektionsdisplays (10) umfasst, wobei ein jeweiliges Multiapertur-Projektionsdisplay (10) ein Leuchtmittel (1) zur Beleuchtung einer Vielzahl von Objektstrukturen (3) und ein Array aus Projektionslinsen (4) enthält, wobei jede Projektionslinse (4) einer Objektstruktur (3) zugeordnet ist, welche durch die jeweilige Projektionslinse (4) in zumindest eine Projektionsebene (5, 5', 5") projiziert wird, welche sich senkrecht und/oder schräg zum Boden in der Umgebung des Kraftfahrzeugs erstreckt, wobei das oder die Multiapertur-Projektionsdisplays (10) derart ausgestaltet sind, dass durch konstruktive Überlagerung der projizierten Objektstrukturen (3) ein Gesamtbild mit einer durch den Fahrer des Kraftfahrzeugs (10) wahrnehmbaren Symbolik (S1, S2, S3) in der zumindest einen Projektionsebene (5, 5', 5") erzeugt wird, **dadurch gekennzeichnet, dass** ein oder mehrere einzelne Multiapertur-Projektionsdisplays (10) derart ausgestaltet sind, dass mit dem jeweiligen einzelnen Multiapertur-Projektionsdisplay (10) in mehreren Projektionsebenen (5, 5', 5") mit unterschiedlichem Abstand (d1, d2, d3) vom Kraftfahrzeug verschiedene Gesamtbilder mit unterschiedlicher, durch den Fahrer des Kraftfahrzeugs wahrnehmbarer Symbolik (S1, S2, S3) generiert werden.

2. Kraftfahrzeug nach Anspruch 1, **dadurch gekennzeichnet, dass** die Objektstrukturen (3) eines einzelnen Multiapertur-Projektionsdisplays (10) die Verknüpfung von mehreren separaten Arrays von Objektstrukturen (3', 3") aus transmittiven und lichtundurchlässigen Bereichen sind, wobei:

   - die separaten Arrays derart ausgestaltet sind, dass für jedes separate Array ein Gesamtbild einer jeweiligen Projektionsebene (5, 5', 5") mit im Vergleich zu den anderen separaten Arrays unterschiedlichem Abstand vom Kraftfahrzeug und unterschiedlicher Symbolik (S1, S2, S3) generiert wird,
   - die Verknüpfung der separaten Arrays derart ist, dass nur diejenigen transmittiven Bereiche wiedergegeben werden, welche in den Objektstrukturen (3', 3") aller separater Arrays vorkommen und ansonsten die Objektstrukturen (3) der Verknüpfung lichtundurchlässig sind.

3. Kraftfahrzeug nach einem der vorhergehenden Ansprüche, **dadurch gekennzeichnet, dass** zumindest ein Teil der Symboliken (S1, S2, S3) jeweils ein oder mehrere Schriftzeichen und/oder Piktogramme und/oder Zahlen umfasst.

4. Kraftfahrzeug nach einem der vorhergehenden Ansprüche, **dadurch gekennzeichnet, dass** zumindest ein Teil der Symboliken (S1, S2, S3) jeweils den Abstand (d1, d2, d3) der entsprechenden Projektionsebene (5, 5', 5") von dem Kraftfahrzeug angibt.

5. Kraftfahrzeug nach einem der vorhergehenden Ansprüche, **dadurch gekennzeichnet, dass** zumindest ein Teil der Symboliken (S1, S2, S3) jeweils einen Warnhinweis für den Fahrer beinhaltet.

6. Kraftfahrzeug nach Anspruch 5, **dadurch gekennzeichnet, dass** die Symbolik (S1, S2, S3) in der Projektionsebene (5, 5', 5") mit dem geringsten Abstand (d1, d2, d3) vom Kraftfahrzeug oder die Symboliken (S1, S2, S3) in denjenigen Projektionsebenen (5, 5', 5"), deren Abstand (d1, d2, d3) vom Kraftfahrzeug eine vorbestimmte Schwelle unterschreiten, den Warnhinweis für den Fahrer beinhalten.

7. Kraftfahrzeug nach einem der vorhergehenden Ansprüche, **dadurch gekennzeichnet, dass** für zumindest einen Teil der Multiapertur-Projektionsdisplays (10) die Projektionsebene oder Projektionsebenen (5, 5', 5") vor der Fahrzeugfront und vorzugsweise im Wesentlichen senkrecht zur Fahrzeugfront liegen.

8. Kraftfahrzeug nach einem der vorhergehenden Ansprüche, **dadurch gekennzeichnet, dass** für zumindest einen Teil der Multiapertur-Projektionsdisplays (10) die Projektionsebene oder Projektionsebenen (5, 5', 5") hinter dem Fahrzeugheck und vorzugsweise im Wesentlichen senkrecht zum Fahrzeugheck liegen.

9. Kraftfahrzeug nach einem der vorhergehenden Ansprüche, **dadurch gekennzeichnet, dass** für zumindest einen Teil der Multiapertur-Projektionsdisplays (10) die Projektionsebene oder Projektionsebenen (5, 5', 5") parallel zur Längsachse des Kraftfahrzeugs verlaufen und versetzt zu einer Längsseite des Kraftfahrzeugs seitlich neben und/oder vor und/oder hinter der Längsseite angeordnet sind.

10. Kraftfahrzeug nach Anspruch 9, **dadurch gekennzeichnet, dass** die Symbolik (S1, S2, S3) eine parallel zur Längsachse des Kraftfahrzeugs verlaufende Linie umfasst.

11. Kraftfahrzeug nach einem der vorhergehenden Ansprüche, **dadurch gekennzeichnet, dass** zumindest ein Multiapertur-Projektionsdisplay (10) in zumindest einem Frontscheinwerfer und/oder zumindest einer Heckleuchte des Kraftfahrzeugs vorgesehen ist.

12. Kraftfahrzeug nach Anspruch 11, **dadurch gekennzeichnet, dass** in einem linken und rechten Scheinwerfer und/oder in einer linken und rechten Heckleuchte jeweils zumindest ein Multiapertur-Projektionsdisplay (10) vorgesehen ist.

## Claims

1. A motor vehicle with a lighting means which comprises one or more multi-aperture projection displays (10), wherein a respective multi-aperture projection display (10) contains an illumination means (1) for illuminating a large number of object structures (3) and an array of projection lenses (4), wherein each projection lens (4) is associated with an object structure (3) which is projected by the respective projection lens (4) into at least one projection plane (5, 5', 5'') which extends perpendicularly and/or obliquely to the ground in the vicinity of the motor vehicle, wherein the multi-aperture projection display or displays (10) are configured such that by structurally superposing the projected object structures (3) an overall image with a symbol set (S1, S2, S3) which can be perceived by the driver of the motor vehicle (10) is produced in the at least one projection plane (5, 5', 5''),
**characterised in that**
one or more individual multi-aperture projection displays (10) are configured such that with the respective individual multi-aperture projection display (10) different overall images with a different symbol set (S1, S2, S3) which can be perceived by the driver of the motor vehicle are generated in a plurality of projection planes (5, 5', 5'') at different distances (d1, d2, d3) from the motor vehicle.

2. A motor vehicle according to Claim 1, **characterised in that** the object structures (3) of an individual multi-aperture projection display (10) are the combination of a plurality of separate arrays of object structures (3', 3'') from transmissive and opaque regions, wherein:

    - the separate arrays are configured such that for each separate array an overall image of a respective projection plane (5, 5', 5'') with compared with the other separate arrays a different distance from the motor vehicle and a different symbol set (S1, S2, S3) is generated,
    - the combination of the separate arrays is such that only those transmissive regions which occur in the object structures (3', 3'') of all the separate arrays are reproduced and otherwise the object structures (3) of the combination are light-impermeable.

3. A motor vehicle according to one of the preceding claims, **characterised in that** at least some of the symbol sets (S1, S2, S3) comprise in each case one or more graphic characters and/or pictographs and/or numbers.

4. A motor vehicle according to one of the preceding claims, **characterised in that** at least some of the symbol sets (S1, S2, S3) indicate in each case the distance (d1, d2, d3) of the corresponding projection plane (5, 5', 5'') from the motor vehicle.

5. A motor vehicle according to one of the preceding claims, **characterised in that** at least some of the symbol sets (S1, S2, S3) comprise in each case a warning for the driver.

6. A motor vehicle according to Claim 5, **characterised in that** the symbol set (S1, S2, S3) in the projection plane (5, 5', 5'') with the shortest distance (d1, d2, d3) from the motor vehicle or the symbol sets (S1, S2, S3) in those projection planes (5, 5', 5''), the distance (d1, d2, d3) of which from the motor vehicle lies below a predetermined threshold, comprise the warning for the driver.

7. A motor vehicle according to one of the preceding claims, **characterised in that** for at least some of the multi-aperture projection displays (10) the projection plane or projection planes (5, 5', 5'') lie in front of the front end of the vehicle and preferably substantially perpendicularly to the front end of the vehicle.

8. A motor vehicle according to one of the preceding claims, **characterised in that** for at least some of the multi-aperture projection displays (10) the projection plane or projection planes (5, 5', 5'') lie behind the rear end of the vehicle and preferably substantially perpendicularly to the rear end of the vehicle.

9. A motor vehicle according to one of the preceding claims, **characterised in that** for at least some of the multi-aperture projection displays (10) the projection plane or projection planes (5, 5', 5'') run parallel to the longitudinal axis of the motor vehicle and are arranged offset relative to a long side of the motor vehicle laterally next to and/or in front of and/or behind the long side.

**10.** A motor vehicle according to Claim 9, **characterised in that** the symbol set (S1, S2, S3) comprises a line running parallel to the longitudinal axis of the motor vehicle.

**11.** A motor vehicle according to one of the preceding claims, **characterised in that** at least one multi-aperture projection display (10) is provided in at least one front headlight and/or at least one tail light of the motor vehicle.

**12.** A motor vehicle according to Claim 11, **characterised in that** at least one multi-aperture projection display (10) in each case is provided in a lefthand and righthand headlight and/or in a lefthand and righthand tail light.

**Revendications**

**1.** Véhicule comprenant un dispositif d'éclairage qui comporte au moins un écran de projection à ouvertures multiples (10), chaque écran de projection (10) à ouvertures multiples comprenant un moyen d'éclairage (1) permettant d'éclairer un ensemble de structures d'objet (3) et un réseau de lentilles de projection (4), chaque lentille de projection (4) étant associée à une structure d'objet (3) qui est projetée par la lentille de projection (4) respective dans au moins un plan de projection (5, 5', 5") qui s'étend perpendiculairement et/ou obliquement par rapport au sol dans l'environnement du véhicule, l'affichage de projection (10) à ouvertures multiples étant réalisé de sorte qu'une superposition constructive des structures d'objet (3) projetées permette d'obtenir une image globale avec un symbolisme (S1, S2, S3) perceptible par le conducteur du véhicule dans le plan de projection (5, 5', 5"),
**caractérisé en ce qu'**
au moins un écran de projection (10) à ouvertures multiples individuel est réalisé de sorte qu'il permette de générer dans plusieurs plans de projection (5, 5', 5") situés une distance (d1, d2, d3) différente du véhicule différentes images globales ayant différents symbolismes (S1, S2, S3) perceptibles par le conducteur du véhicule.

**2.** Véhicule conforme à la revendication 1,
**caractérisé en ce que**
les structures d'objet (3) d'un écran de projection (10) à ouvertures multiples individuel sont la combinaison de plusieurs réseaux séparés de structure d'objet (3', 3") ayant des zones transmittives et imperméables à la lumière, et

- les réseaux séparés sont réalisés de façon à permettre de générer pour chaque réseau séparé une image globale d'un plan de projection (5, 5', 5") respectif ayant, par rapport aux autres réseaux séparés, des distances différentes du véhicules et des symbolismes (S1, S2, S3) différents, et
- la combinaison des réseaux séparés est telle que seules soient reproduites les zones transmittives (3', 3") qui sont présentes dans tous les réseaux séparés, et sinon les structures d'objet (3) de la combinaison sont imperméables à la lumière.

**3.** Véhicule conforme à l'une des revendications précédentes,
**caractérisé en ce qu'**
au moins une partie des symbolismes (S1, S2, S3) renferme respectivement au moins un caractère et/ou pictogramme.

**4.** Véhicule conforme à l'une des revendications précédentes,
**caractérisé en ce qu'**
au moins une partie des symbolismes (S1, S2, S3) précise respectivement la distance (d1, d2, d3) du plan de projection (5, 5', 5") correspondant au véhicule.

**5.** Véhicule conforme à l'une des revendications précédentes,
**caractérisé en ce qu'**
au moins une partie des symbolismes (S1, S2, S3) renferme respectivement une indication d'alarme pour le conducteur.

**6.** Véhicule conforme à la revendication 5,
**caractérisé en ce que**
les symbolismes (S1, S2, S3) situés dans les plans de projection (5, 5', 5") ayant la plus petite distance (d1, d2, d3) du véhicule ou les symbolismes (S1, S2, S3) situés dans les plans de projection (5, 5', 5") dont la distance (d1, d2, d3) du véhicule dépasse un seuil prédéfini renferment l'indication d'alarme pour le conducteur.

**7.** Véhicule conforme à l'une des revendications précédentes,
**caractérisé en ce que**
pour au moins une partie des écrans de projection (10) à ouvertures multiples, le ou les plan(s) de projection (5, 5', 5") sont situés à l'avant de l'avant du véhicule et sont de préférence essentiellement perpendiculaires à l'avant du véhicule.

**8.** Véhicule conforme à l'une des revendications précédentes,
**caractérisé en ce que**
pour au moins une partie des écrans de projection (10) à ouvertures multiples le ou les plan(s) de projection (5, 5', 5") sont situés à l'arrière du véhicule et sont de préférence perpendiculaires à l'arrière du véhicule.

**9.** Véhicule conforme à l'une des revendications précédentes,
**caractérisé en ce que**
pour au moins une partie des écrans de projection (10) à ouvertures multiples, le ou les plan(s) de projection (5, 5', 5") s'étendent parallèlement à l'axe longitudinal du véhicule et sont décalés par rapport à un côté longitudinal du véhicule, latéralement à proximité et/ou à l'avant et/ou à l'arrière du côté longitudinal.

**10.** Véhicule conforme à la revendication 9,
**caractérisé en ce que**
le symbolisme (S1, S2, S3) comprend une ligne s'étendant parallèlement à l'axe longitudinal du véhicule.

**11.** Véhicule conforme à l'une des revendications précédentes,
**caractérisé en ce qu'**
au moins un écran de projection (10) à ouvertures multiples est situé dans au moins un phare frontal et/ou au moins un feu arrière du véhicule.

**12.** Véhicule conforme à la revendication 11,
**caractérisé en ce qu'**
il est respectivement prévu au moins un écran de projection (10) à ouvertures multiples, dans un phare gauche et un phare droit et/ou un feu arrière gauche et un feu arrière droit.

FIG. 1

FIG. 2

FIG. 3

FIG. 4

FIG. 5

FIG. 6

FIG. 7

FIG. 8

EP 3 198 340 B1

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013167705 A1
- DE 102011076083 A1
- WO 2013111032 A1
- GB 2482951 A
- FR 2967625 A1
- DE 102006059684 A1
- DE 590399 C
- DE 102009024894 A1